# EUROPEAN PATENT SPECIFICATION

(11) **EP 2 888 933 B1**
(45) Date of publication and mention of the grant of the patent: **27.07.2016**
(21) Application number: 13199659.7
(22) Date of filing: 27.12.2013
(51) Int. Cl.: A01G 31/00

(54) **AEROPONIC GROWTH UNIT FOR GROWING PLANTS, SYSTEM, GREENHOUSE AND METHODS THEREOF**
AEROPONISCHE WACHSTUMSEINHEIT ZUM ZÜCHTEN VON PFLANZEN, SYSTEM, GEWÄCHSHAUS UND VERFAHREN DAMIT
UNITÉ DE CROISSANCE AÉROPONIQUE POUR LA CROISSANCE DE PLANTES, SYSTÈME, SERRE ET PROCÉDÉS ASSOCIÉS

(43) Date of publication of application: 01.07.2015
(73) Proprietor: OLUSCULUM PTE LTD, 049908 (SG)
(72) Inventor: Steuart, Douglas Osborne, 20260 Chonburi (TH)
(74) Representative: Vidon Brevets & Stratégie

(56) References cited:
- EP-A1- 2 644 025
- WO-A2-01/83690
- US-A- 4 976 064
- US-A1- 2007 113 472
- US-A1- 2007 271 841

## Description

### TECHNICAL FIELD OF THE INVENTION

The present invention relates to an aeroponic growth unit for growing plants, as well as a system for growing plants aeroponically comprising said unit, a greenhouse comprising said system, and methods for growing plants aeroponically thereof. The invention allows improving the plant growth rates.

### BACKGROUND

Over the years, different methods of growing plants have been developed and tested. Depending on the growth environment and conditions, such methods have been classified in various types, such as geoponics, hydroponics, aquaponics, and *in vitro* growing. For example, it is known from US patent 4,976,064 a hydroponic installation for growing plants, in which the roots are constantly immersed in an aqueous nutrient solution, and which comprises particularly a new device for injection of nutrient solution.

Aeroponics is a process of growing plants in an air or mist environment without the use of soil or an aggregate medium. In contrast, the plant is suspended over the aeroponic chamber (also called the root chamber), so that the lower portion of the plant, preferably consisting essentially of the roots, is disposed within the aeroponic chamber. The aeroponic chamber is a confined and controlled environment. The roots are periodically or continuously sprayed with water, potentially supplemented with nutrients and/or air.

Various-aeroponic growth units and systems have been developed. See for example US4669217, US2007/0113472A1, etc. However, in spite of the improvements provided and/or the alternative executions made, recurring challenges have been faced - particularly vis-à-vis plant growth rate, liquid delivery, pest control, sanitation, temperature and humidity control, energy efficiency, space management, maintenance timing.

Particularly, EP2644025 discloses a movable aeroponic growth unit for growing plants and an improved system for growing plants aeroponically. Said unit comprises a vessel forming a root chamber, a. cover for sealing the top opening of the vessel comprising at least one aperture, at least one Spraying means, and piping for nutrient solution feed and for drainage. Said unit also comprises a set of guiding strings in the root chamber for routing the roots. While said unit and system thereof have multiple advantages, there is the need for further improvements. Indeed, the use of guiding strings, while contributing to root growth maximization, has shown being time consuming for the user/farmer. In addition, the delivery of the nutrient solution has not shown to be facilitated, improved.

There is the constant need thereof in providing units and systems thereof allowing growing plants at an increased growth rate. There is also the need for improving the delivery of the liquid, such as a nutrient solution, for ensuring the sufficient, regular and/or even watering to the roots. There is particularly the need for avoiding over-spraying and/or uneven spraying of the roots. There is also the need for providing units and systems, which are easy to manipulate upon use, by avoiding unnecessary and/or time-consuming steps. Finally, there is also the need for providing units and systems, the use of which maximizes the root growth and/or the plant growth.

### - SUMMARY OF THE INVENTION

According to a first aspect, the present invention relates to an aeroponic growth unit for growing plants according to claim 1.

According to the invention, the element made of perforated material is selected from the group consisting of a tubular element, a wrapping element, or combination thereof.According to a second aspect, the present invention relates to a system for growing plants aeroponically, wherein, said system comprises at least two units placed directly adjacent to each other so that the cover of the vessel are tightly fitted against each other, and according to claim 10.

According to a third aspect, the present invention relates to a green house, comprising at least one system according to claim 11.

According to fourth aspect, the present invention relates to a method for growing plants aeroponically according to claim 12.

### FIGURES

Figure 1. is a photograph of a tubular element 9, according to the invention.
Figures 2 and 3 are schematic representations in perspective of tubular elements according to the invention.
Figure 4 is a photograph of a wrapping element 10 according to the invention.
Figure 5 is a diagrammatic representation of a method for growing plants aeroponically according to the invention.
Figures 6 to 8 are photographs showing the step of providing and wrapping the lower portion 12 of a plant.
Figure 9 is a diagrammatic representation of the wrapping of the lower portion 12 of a plant, using a wrapping element 10.

### DETAILED DESCRIPTION

In the first and second aspects, the present invention relates to an aeroponic growth unit 1, and a system thereof, for growing plants.

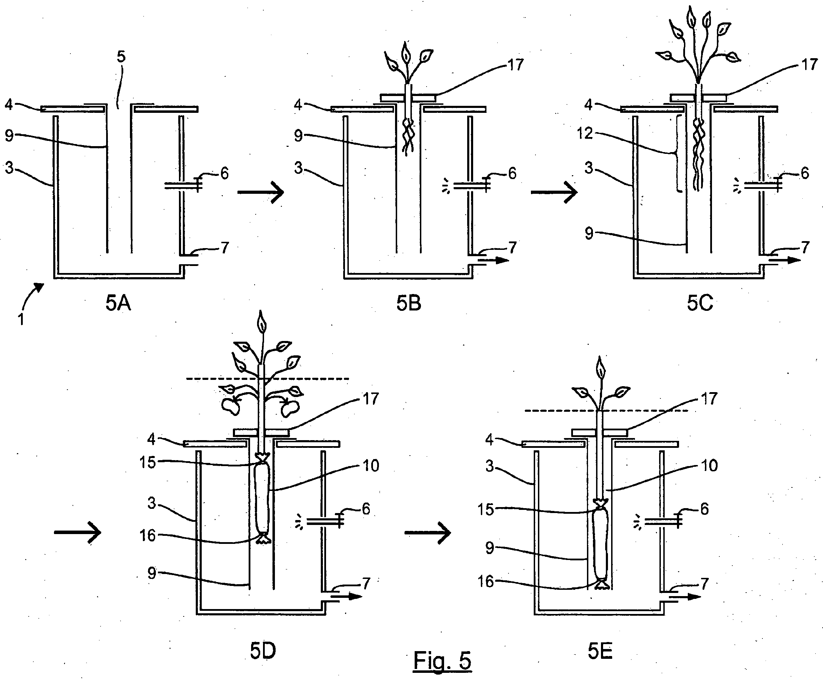

As shown in figure 5, the aeroponic growth unit 1 comprises an aeroponic chamber, at least one spraying means 6, at least one piping means and at least one drainage means 7. The unit 1 also comprises at least one element made of perforated material 9,10. The aeroponic chamber is suitable for enclosing the lower portion 12 of a plant, preferably the root portion of the plant. In the present invention, the term "lower portion of the plan" designates the portion of the plant, which is enclosed into the aeroponic chamber. Preferably, it designates the portion of the plant located below the mounting means 17, described hereinafter. The lower portion of the plant may be therefore roots or any other portions, as far as they are located into the aeroponic chamber. It may also be for example a stem section free of leaves and fruits, as described hereinafter.

The aeroponic chamber comprises a top section, a bottom section and a side section connecting the bottom section to the top section. The side section may comprise at least one wall, preferably four walls. Said top, side and/or bottom sections may be solidary to each other and made of one part only. Alternatively, the top, side and/or bottom sections may be independent parts being affixed to each other, either permanently or releasably. The aeroponic chamber delimitates a cavity being substantially closed and therefore separate from the surrounding environment. Such set-up allows controlling the conditions inside the aeroponic chamber. The aeroponic chamber is suitable for enclosing the lower portion 12 of a plant, preferably the root portion of the plant.

In a preferred embodiment, as shown in figure 5, the aeroponic chamber comprises a first part forming a vessel 3, and a second part forming a cover 4. The vessel 3 comprises a side section, a bottom section, and a top opening. The side and bottom sections are solidary to each other and made of the same material. The cover 4 is placed on top of the vessel 3 in order to seal its top opening. The vessel 3 and the cover 4 may be made of any suitable material.

As shown in figure 5, the top section of the chamber comprises at least one aperture 5. The apertures 5 are suitable for mounting the plant onto the chamber and letting it passing through. When the aeroponic chamber comprises a first part forming a vessel 3 and a second part forming a cover 4, the cover 4 comprises the at least one aperture 5. The aperture 5 may be of any suitable shape, from square to circular. The aperture 5 may have a cross-section (diameter if circle, side if square, etc.) of an average size of about 2cm to about 15cm, preferably of about 2cm to about 15cm, more preferably of about 3cm to about 12cm, still more preferably of about 4cm to about 9cm.

The unit 1 also comprises at least one element made of perforated material 9,10, preferably a tubular element 9, a wrapping element 10, or combination thereof. By the term "perforated material", it is meant a material having perforations and/or apertures, letting droplets of liquid passing through. The perforated material does not form therefore an impermeable barrier. In the figures, the element is either shown as a tubular element 9 or a wrapping element 10. The element made of perforated material 9,10 is suspended to the top section of the chamber and extends downwardly. The element made of perforated material 9,10 may be suspended directly or indirectly to the top section of the chamber. When the aeroponic chamber comprises a first part forming a vessel 3 and a second part forming a cover 4, the element made of perforated material 9,10 may be suspended directly or indirectly to the cover 4. The element made of perforated material 9,10 is suitable for accommodating the lower portion 12 of the plant, preferably the root portion of the plant.

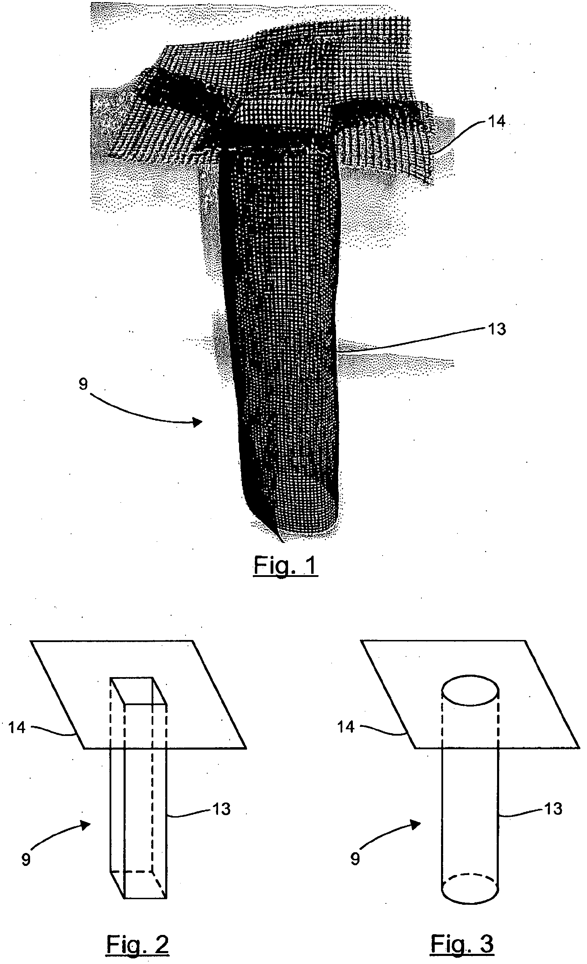

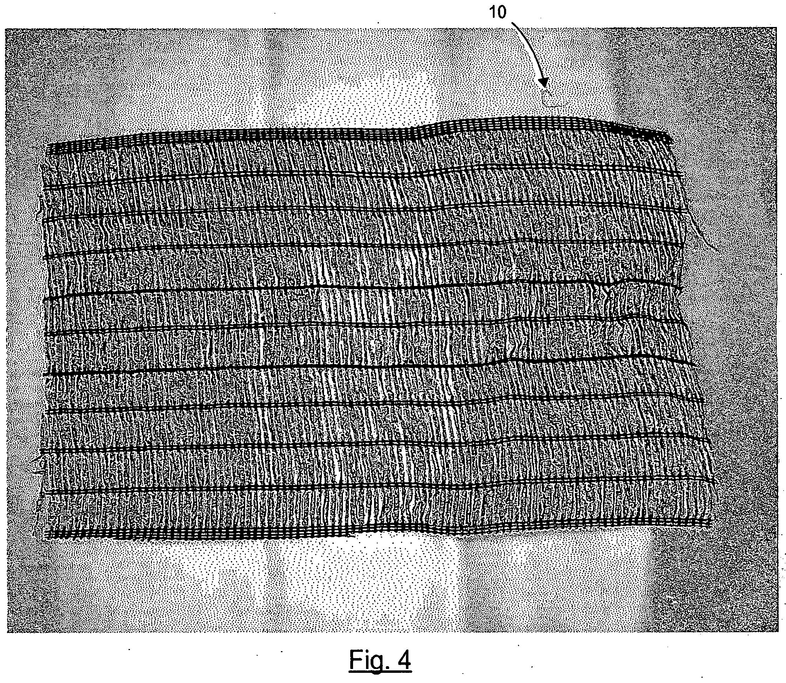

The element made of perforated material 9,10 may comprise a plurality of apertures of an average surface of from about 10 to about 100 square centimetres, alternatively from about 30 to about 90 sqcm², alternatively from about 50 to about 80 sqcm². In figures 1 and 4; it is shown photographs of elements 9,10, wherein the apertures can be seen. The apertures may substantially have the same average surface or may have a differing average surface. The average surface of the apertures may need to be adapted, depending on the plants to be grown, as it is well known that plant species have roots of different types and sizes. However, it has been found that the elements made of perforated material 9,10 to be used in the present invention shall have apertures of sufficient average surface for letting the roots passing through it.

The element made of perforated material 9,10 may be made of a synthetic material, preferable a synthetic material selected from the group consisting of polypropylene, PVC and/or nylon. The element made of perforated material 9,10 may be made of a rigid or a flexible material. It has been found that careful selection of the material used is needed, for avoiding degradation and/or pest infestation of the elements made of perforated material 9,10. The aeroponic growth unit 1 may be used under conditions that may alter the integrity of the materials if not chosen appropriately. For example, aeroponic unit 1 may be used under acidic, humid and/or warm conditions, which are prone for degrading unsuitable materials such as non-pH resistant materials and/or organic materials prone to algae infestation. In a preferred embodiment, the perforated material is selected from the group consisting of acidic pH-resistant material, moisture-resistant material, and combinations thereof.

Whenever appropriate, the element made of perforated material 9,10 may be pre-treated, so that to be more resistant to the environmental conditions upon use. This includes, for example, a pre-treatment with anti-pest products including anti-pest products selected from the group consisting of antibacterial, antiviral, antifungal, anti-algae products, and their combinations thereof. Such a pre-treatment can be used as an alternative or in complementation of other ways of disinfecting the aeroponic growth unit, including using H₂O₂.

The element made of perforated material may be selected from the group consisting of a tubular element 9, a wrapping element 10, and combination thereof. The use of a tubular element 9 and a wrapping element 10 are not exclusive to each other, they may be used concomitantly.

In one embodiment, the element made of perforated material is a tubular element 9. A photograph of an exemplary tubular element 9 is shown in figure 1, as well as schematic representations of two different tubular elements 9 (apertures/net not shown for easing the representation). The tubular element 9 comprises a main body 13 forming a vertical column, extending downwardly. The main body 13 may have a horizontal cross-section of an average size of about 2 to about 15cm, preferably of about 2cm to about 15cm, more preferably of about 3cm to about 12cm, still more preferably of about 4cm to about 9cm. The main body 13 may have any suitable cross-sectional shape, for example substantially circular or squared, as shown respectively in figures 3 and 2. In a preferred embodiment, the main body 13 has a circular cross-sectional shape, as shown in figure 3. The shape and size of the main body 13 cross-section is correlated to the shape and size of the aperture 5 of the top section of the aeroponic chamber. The main body 13 may have a length of about 20 to about 200cm, preferably of about 40cm to about 140cm, more preferably of about 60cm to about 120cm. The length of the main body 13 is correlated to the depth of the aeroponic chamber. The tubular element 9 may be directly attached to the top section of the chamber. Whenever needed, any suitable attachment means may be used, for example screws, pins, hooks, glue. The tubular element 9 may also comprise a substantially horizontal top edge 14, so that said top edge rests on the top section of the aeroponic chamber after inserting the tubular element 9 through the aperture 5, as shown in figure 5. Preferably, the element made of perforated material being a tubular element 9 is releasably attached to and/or rested onto the top section of the chamber.

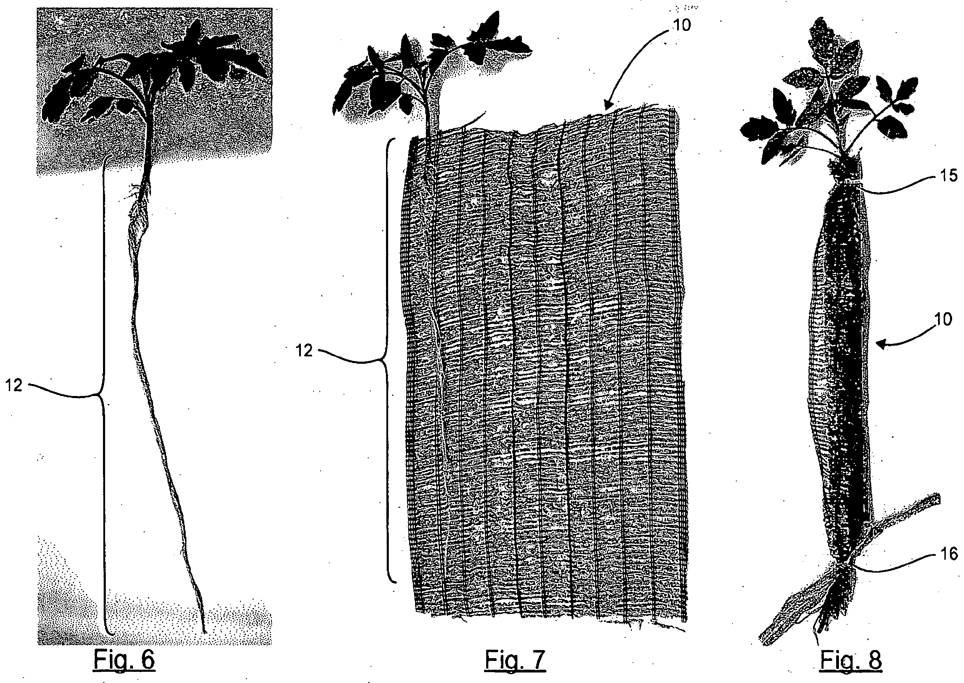

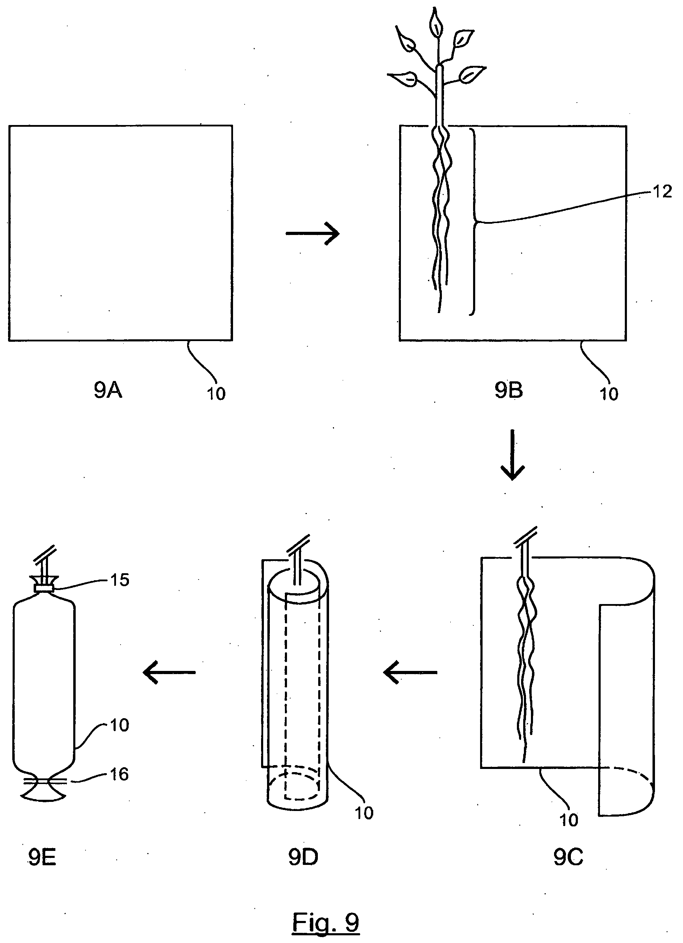

In another embodiment, the element made of perforated material is a wrapping element 10. A photograph of an exemplary wrapping element 10 is shown in figure 4. A schematic wrapping element 10 is also shown in figure 9 (apertures/net of the wrapping element 10 in all figures 9 and lower part of the plant in figures 9D and 9E not shown for easing the representation). The wrapping element 10 may be a pre-formed envelop of substantial circular cross-section into which the lower part of the plant is inserted. Alternatively, the wrapping element 10 may be wrapped around the lower part 12 of the plant, as shown in the three photographs labelled figures 6 to 8, and as shown in the diagrammatic representation of the wrapping in five steps 9A to 9E of the lower portion 12 of a plant. When the wrapping element 10 is wrapped around the lower portion 12 of the plant, it may be provided as a sheet of perforated materials, of sufficient width for being wrapped at least once around the lower portion 12 of the plant. The wrapping element may have a width of about 5cm to about 50 cm, preferably of about 10cm to about 30cm. The wrapping element 10 may have a length of about 10cm to about 200cm, preferably of about 30cm to about 150cm, more preferably of about 60cm to about 100cm. The wrapping element 10 may be directly attached to the top section of the lower portion 12 of the plant, as shown in figures 5D, 5E and 9E. The wrapping element 10 may be wrapped at least once around the lower portion 12 of the plant, preferably from about 2 to about 10 times, more preferably from about 3 to 8 times, as schematically represented in figure 9D. Any suitable means 15 may be used, such as a rubber band, tape, a grip. The wrapping element 10 is preferably opened at its top end. Such configuration allows accommodating the lower part of the plant inside the wrapping element 10. In contrast, the wrapping element 10 may be closed or opened at its bottom end. The bottom end may be closed by any suitable means 16, such as a knot, a cord, tape, a grip, etc. Preferably, the wrapping element 10 is opened at its top end but tightly attached to the lower portion 12 of the plant and closed at its bottom end, as shown in figures 5D, 5E and 9E.

The inventors have surprisingly found that using at least one element made of perforated material 9,10, particularly a tubular element 9 and/or a wrapping element 10, allows improving the plant growth, and particularly the root development. In prior art, it was usually acknowledged that the lower portion of the plant should not be placed in any medium, but instead be suspended freely into the aeroponic chamber. Some means, such as support means, were experimented - see for example the guiding strings as disclosed in the European Patent application EP2644025. However, such means were not designed for forming a physical barrier between the lower part of the plant and the spraying means, as it was expected that such barrier would impair the delivery of liquid to the plant and therefore impact negatively the plant growth rate. However, for ensuring that the delivery of liquid was optimized, and therefore for avoiding over-spraying, under-spraying and/or uneven spraying, there was a need for using sophisticated spraying means, and/or for closely monitoring the delivery of the liquid for avoiding blockages. The inventors have unexpectedly found that such downsides may be overcome by using at least one element made of perforated material 9,10 placed around the lower part of the plant. They found out firstly that such element made of perforated material 9,10 does not impact negatively on the plant growth, particularly on the root development, but also demonstrated surprisingly that the element made of perforated material 9,10 actually improves the plant growth rate. Indeed, it was found out that the element made of perforated material 9,10 does not prevent the delivery of the nutrient solution, but instead facilitates it by micronizing the droplets sprayed, preventing therefore any over-spraying and evening out the delivery all over the lower part of the plants. As reported below, placing a element made of perforated material 9,10 allows improving significantly the plant growth rate. The inventors also found that the element made of perforated material 9,10 can be designed in two different ways, i.e. as a tubular element 9 extending downwardly from the top section the aeroponic growth unit 1 and as a wrapping element 10 being wrapped around the lower part of the plants. Using both system concomitantly has proven useful for improving the plant growth rate.

The unit 1 also comprises at least one spraying means 6, as shown in figure 5. The spraying means 6 is suitable for spraying a nutrient solution into the aeroponic chamber. The spraying means 6 preferably comprises at least one fluid inlet, at least one flow pipe and at least one spray head. The details of the spraying means are not shown in the figures, wherein it is only schematically represented. It is of importance avoiding the blockage the spray head(s) by incoming debris, otherwise the spray heads would need to be cleaned or even exchanged. In order to avoid this, the spraying means 6 may comprise a flow pipe with a run off venting valve suitable for high volume bypass flow to avoid blockage of the spraying means 6. Preferably, the run off venting valve is located at the opposite end of the fluid inlet of the spraying means 6. The spray head, being preferably jets, are inserted and mounted onto the flow pipe, into insertion holes. A plurality of spray heads may be mounted onto the flow pipe. They may all be oriented to the same direction, e.g. to the top. Alternatively, they may be oriented in different directions, in order to allow spraying the nutrient solution at various angles and places of the aeroponic chamber, for example for allowing both lateral, upward and downward spraying. The spray heads may be mounted at regular distance to each other onto the flow pipe. In prior art aeroponic growth unit 1, the setup of the spraying means 6 was key, in order to ensure a satisfactory watering of the lower portion 12 of the plants. Indeed, there was the challenge of sufficiently watering waters, in an even manner, and without over-spraying parts or all of the root portion. The inventors have found unexpectedly that, by accommodating the lower portion 12 of the plant into a element made of perforated material 9,10 as described herein, the above-mentioned drawbacks are avoided. Indeed, the element made of perforated material 9,10, by forming a porous physical barrier between the lower part of the plant and its surrounding environment, evens out the delivery of the nutrient solution to the lower part of the plant, and prevents therefore the nutrient solution to be over-delivered or under-delivered to some parts of the plant. Considering that aeroponics implies direct spraying of liquid, for example water, to the roots of a plant, the skilled in the art would have been prevented from using any physical barrier, hence a element made of perforated material 9,10, as s/he would have considered that such barrier would have impacted negatively and/or reduce the delivery of liquid to the lower part of the plant, and therefore impaired the plant growth rate. However, the inventors have surprisingly found that the opposite happens, as the element made of perforated material 9,10, particularly by micronizing the liquid droplets, contributes to an increased growth rate.

The unit 1 also comprises at least one piping means (not shown). The piping means is suitable for feeding the nutrient solution to the spraying means 6.

The unit 1 also comprises at least one drainage means 7. The drainage means 7 is suitable for draining out the excess of nutrient solution from the aeroponic chamber.

The unit 1 may further comprise a mounting means 17. The mounting means 17 is suitable for mounting a portion of the plant tightly. Preferably, the plants are mounted onto the aeroponic chamber in an individual manner, i.e. by using one mounting means 17 per plant mounted. When present, the mounting means 17 is attached to the aperture 5 of the top section of the chamber. Preferably, the mounting means 17 is tightly, releasably attached onto the aperture 5. The mounting means 17 may be made of rubber foam, said rubber foam having preferably a sealed smooth finish on top and bottom, so has trapped air and floats, and is about 0.5 cm thick.

The foam rubber may be cut into squares of the required size, for example 5 cm. A small hole for the correct size for the initial plant stem thickness is punched out in the centre of the square, and then the rubber foam is cut from the centre of one side to the punched hole. The rubber square can now be opened along the slit, and the individual plantlet slid in without root damage, and the rubber then springs back to its original location. The slit can be permanently closed with a piece of adhesive tape. The stem is now slightly clamped in its punched hole and then its roots are suspended through the hole made for it in the cover 4.

The rubber mount has the great advantages of stretching as the plant stem expands with growth without any stem damage, completely stopping any light entering the root chamber, and completely stopping evaporation of water from the tank. It has the additional benefit that the plant/root height can be adjusted within the mount.

The unit 1 may be movable. In one embodiment, the unit 1 may be mounted on at least three wheels (not shown) for permitting free running the unit 1 along one movement axis only. In a preferred embodiment, the wheels are unidirectional. The placing of the aeroponic growth unit 1 on wheels, that permits free running along one movement axis, improves space utilization. The aeroponic growth units 1 may be placed closely together and in rows. When the wheels are positioned to move at right angles to the row, whole rows containing a plurality of aeroponic growth units 1 can be moved at once. In a larger scale aeroponic growth setup, where more than one row of aeroponic growth units 1 is used, the rows can be positioned directly adjacent to each other without the need for leaving access aisles free between the rows, since the rows can easily be separated where needed in order to provide an access aisle. This setup allows high compression of the growing area. This setup also allows increased efficiency of any heating and/or cooling requirements, since the individual aeroponic growth units 1 can be spaced directly adjacent to each other, leaving virtually no space between the top section, preferably the covers 4, of two adjacent aeroponic units 1.

In one embodiment, if deemed necessary, a guiding string (not shown) for routing the lower portion 12 of the plant may be used.

In one embodiment, the unit 1 is free of any tube suitable for receiving the root of the plant, being in communication with the aeroponic chamber and being attached to its bottom section.

The temperature of the aeroponic chamber may be controlled by any suitable means (not shown). The control of this factor is of importance for the aeroponic chamber to reach a temperature at which the plant growth is optimal. Depending on the needs, the temperature may be cooled down or heated up, by using any suitable temperature-regulating means. For example, in hot climates, the aeroponic chamber may be cooled down by using a suitable cooling means, so that the temperature inside the aeroponic chamber is lower than the temperature of the surrounding environment, preferably the temperature inside the greenhouse. One simple way of cooling down the temperature inside the aeroponic chamber is spraying a cooled nutrient solution.

In one embodiment, the aeroponic chamber is kept dark, in order to avoid the growth of algae. The various means used, such as the vessel 3 and the cover 4, may be made of opaque materials. A sheet made of light reflective materials (not shown), placed over the top of the top section of the aeroponic chamber, preferably the cover 4, may also be used, in addition or instead. The sheet would be pierced at the niveau of the apertures 5 of the top section of the aeroponic chamber.

In one embodiment, whenever necessary, for example depending on the plants to be grown and/or the surrounding environmental conditions, the aeroponic chamber may comprise at least one air exchange point (not shown), such as an air entry and/or exit point. Such air exchange point may be placed at any suitable location of the aeroponic chamber.

The unit 1 is suitable for growing a wide range of plants. The aeroponic growth unit 1 may be used for growing all type of plants. When it is used the aeroponic growth unit 1 for ever-growing plants, the suitable plants are those with fruits developing progressively up a stem and/or vine. Plants may be selected from the group consisting of tomato, cucumber, aubergine, peppers, pimentos, gherkin, melon, courgette, marrow, gourd, squash,

The unit 1 is suitable for use with any nutrient solution, as far as the nutrient solution can be sprayed into the aeroponic chamber, over the lower part of the plant. Any standard nutrient solutions suitable for growing plants aeroponically can be used. Whenever necessary, the use of the nutrient solution can be complemented with the use of H₂O₂**,** in any suitable way such as common and/or separate spraying.

According to a second aspect, the present invention relates to a system for growing plants aeroponically, wherein said system comprises at least two units 1 placed directly adjacent to each other so that the cover 4 of the vessel 3 are tightly fitted against each other. The at least two units 1 may be moveable units 1 and their wheels may be aligned to allow movement of the units 1 along the same movement axis. When the system comprises three or more aeroponic growth units 1, said units 1 are preferably arranged in rows, and the movement axes of the wheels transverse the longitudinal directions of the rows.

The system may comprise temperature control means. Temperature control means are suitable for controlling the temperature of the aeroponic chamber. Said means is preferably a temperature cooling means. The temperature control may be achieved by controlling the temperature of the nutrient solution, for example by controlling the temperature of the reservoir holding the nutrient solution.

The system may comprise a reservoir. The reservoir is suitable for containing the nutrient solution. The reservoir may be used with one or more units 1, and may be located remotely from them. The reservoir is preferably in fluid communication with the spraying means 6, for delivery of the nutrient solution inside the aeroponic chamber(s). The fluid communication may be achieved using piping, preferably flexible piping.

Inversely, the drainage means 7 of the aeroponic chamber may also be in fluid communication with the reservoir. Said fluid communication may also be using piping, preferably flexible piping. Such communication would allow draining the nutrient solution in excess back to the reservoir. Alternatively, the drainage means 7 may be in communication with a separate drainage reservoir,

The reservoir and/or the drainage reservoir may be movable, particularly may be wheeled.

The reservoir, particularly when connected to the drainage means 7, may be located below the plan of the unit 1. Such location would allow the nutrient solution is excess to be drained to the reservoir, by gravity, without the need of mechanical means, such as pumps.

In a third aspect, the present invention relates to a greenhouse comprising at least one system as described hereinbefore. A suitable setup is described in European patent application EP2644025.

To provide a cost effective greenhouse, the walls can be made for example of insulated blocks with a polystyrene sandwich construction. Light impenetrable materials can be used for the walls of the greenhouse. Indeed, the sidelight in a greenhouse is of little use, as its penetration into a growing plant block is minimal, the useful light is overhead.

The greenhouse may comprise a cellar in which the reservoir tanks can be stored to allow gravity drainage of the nutrient solution in excess from the aeroponic chamber.

The greenhouse may comprise a floor made of low friction material.

Different plant setup may be envisaged. A conventional row spacing with all plants at right angles from each other, or rows that are offset so each row sits down into the radius free space of the next row. The latter is preferred according to the present invention as it gives far denser planting and makes an almost inaccessible block of plants. It is preferred that four row deep growing areas are used, that are accessible from both sides.

According to a fourth aspect, the present invention relates to a method for growing plants aeroponically comprising the steps of:
a) providing an aeroponic growth unit 1 as described hereinbefore;
b) providing a plant;
c) mounting tightly the plant onto the aperture 5, preferably using a mounting means 17, so that the lower part, preferably the root portion, of the plant hangs down into the aeroponic chamber;
d) accommodating the lower portion 12 of the plant into the at least one element made of perforated material 9,10;
e) attaching the at least one element made of perforated material 9,10 to the top portion of the aeroponic chamber and/or to the top section of lower portion 12 of the plant;
f) spraying the nutrient solution at determined time and quantities for watering the lower part of the plant;
g) growing the plant for a time sufficient for roots to develop, flowers to blossom and/or fruits to grow.

According to a fifth aspect, not according to the invention, it is provided a method for ever-growing plants aeroponically, comprising the steps of:
a) providing an aeroponic growth unit 1 as described hereinbefore;
b) providing a plantlet comprising a root portion and a stem portion;
c) mounting tightly the base of the plantlet onto the aperture 5, preferably using a mounting means 17, so that the lower portion 12 of the plantlet, consisting essentially of the root portion, hangs down into the aeroponic chamber;
d) accommodating the root portion of the plant into an element made of perforated material being a tubular element 9;
e) attaching the tubular element 9 to the top of the root portion;
f) growing the plantlet by spraying continuously, or repeatedly at determined times, sufficient quantity of nutrient solution for the plantlet to reach a mature state;
g) wrapping the lower part of the plant into an element made of perforated material being a wrapping element 10;
h) growing further the plant by spraying continuously, or repeatedly at determined times, sufficient quantity of nutrient solution for the plant to grow mature fruits;
i) harvesting the mature fruits and cutting the leaves located at the bottom section of the mature stem;
j) lowering down the plant so that the nude stem section hangs down into the aeroponic chamber;
k) carrying out steps f), i) and j) repeatedly.

A diagrammatic representation of said method not according to the invention is shown in figure 5. Particularly, step a) is schematized in figure 5A, steps b) to d) in figure 5B, step e) in figure 5C, steps h) in figure 5D and step j) in figure 5D. In order to wrap the lower portion of the plant in the wrapping element 10, after step f), an additional step of extracting the lower portion of the plant from the aeroponic chamber may be added. Photographic and diagrammatic representations of the wrapping step are shown respectively in figures 6 to 8, and in figure 9. The wrapping of the lower portion 12 of the plant comprises the steps of providing a plant with a grown lower part 12 (as shown in figure 6), providing a wrapping element (as shown in figure 9A); resting the lower portion 12 of the plant onto the wrapping element (as shown in figures 7 and 9B), wrapping at least once the wrapping element 10 around the lower portion 12 of the plant (as shown in figures 9C and 9D), attaching tightly the top end of the wrapping element using attaching means 15 and closing the bottom end of the wrapping element using closing means 16 (as shown in figures 8 and 9E).

Said method not according to the invention of growing plants aeroponically allows ever-growing, i.e. for ever in theory, plants with fruits developing progressively up a stem and/or a vine. Indeed, after each harvest of mature fruits, the fruits and the leaves located at the bottom section of the stem are removed, so that this "naked" stem section is free of fruits and leaves. As shown in figures 5D and 5E with a dotted line, the plant is then lowered down so that the naked stem section is places within into the aeroponic chamber, the plant being mounted onto the unit 1 using a mounting means 17 being attached just over the naked stem section. As a result, the naked stem section, now being part of the lower portion 12 of the plant, is sprayed of nutrient solution, so that roots would grow. Once new fruits have grown and have been harvested, the same steps of cutting fruits and leaves, lowering down the plant, placing the newly naked stem section into the aeroponic chamber and spraying it over with nutrient solution are carried out. Considering the increased growth rate observed when performing the present invention, the inventors have found out that plants of the type mentioned hereinbefore could be grown virtually perpetually.

### EXAMPLE

The aeroponic growth unit 1, and systems and greenhouse thereof, has been used for growing tomato plants. However, it is apparent that the present invention may be used for growing any other suitable plants.

As shown in figure 5, It is provided an aeroponic chamber comprising a first part forming a vessel 3 and a second part forming a cover 4: The vessel 3 comprises a side section, and a bottom section being solidary to each other. The side forms a four-sided wall with a substantially rectangular cross-section. A cover 4 is also provided, which is placed on top of the vessel 3 in order to seal its top opening.

The cover 4 comprises at least one aperture 5 being squared in shape and having sides of an average length of 5cm. A tubular element 9 made of propylene is provided. It comprises a main body 13 forming a vertical column and having a substantially horizontal top edge 14. The main body 13 has a horizontal cross-section of an average size of about 5cm. It also has a length of about 80cm. The tubular element 9 is introduced into the aeroponic chamber from the top of the aperture 5 and lowered down till the top edge of the tubular element 9 rests on the top surface of the cover 4. This forms a well, into which the lower part of the plant can be introduced and suspended. It is also provided spraying means 6, piping means, drainage means 7, temperature control means, reservoir, etc. as those known in the art such as those disclosed in the European Patent application EP2644025.

It is provided a plantlet, the roots of which are introduced and suspended into the tubular element 9. It is introduced/suspended one plantlet only per aperture 5/tubular element 9. The plantlets are kept in place by using a mounting means 17 onto which the base of plantlet stem is tightly mounted, said mounting means 17 resting on the edge of the aperture 5 and tubular element 9. A commercial nutrient solution is sprayed at regular times for feeding the plantlet. The plantlet may be lifted from time to time out of the tubular element 9/aeroponic chamber for ensuring that the roots are not developing through the aperture 5 of the main body 13 of the tubular element 9. The plantlets are grown till their stems reach a diameter ranging from about 0.5cm to about 1cm. This may take up to five weeks.

Once the stem have reached the wanted diameter, the plants are extracted from the aeroponic growth unit 1, so that to wrap a wrapping element 10 (4 to 5 layers) around the roots. The wrapping element 10, which is provided as a sheet, has a width of about 20 cm and a length of about 60cm to about 100cm. It is closed at its bottom end using a cord, and attached tightly at its top end on the root portion using a plastic grip. Then the wrapped roots are introduced and suspended again into the tubular element 9. The plants are kept in place by using a mounting means 17 onto which the base of plant stem is tightly mounted, said mounting means 17 resting on the edge of the aperture 5 and tubular element 9. A commercial nutrient solution is sprayed at regular times for feeding the plant. The plants are grown till tomatoes are grown sufficiently for being harvested. This may take up to six to twelve weeks.

Once the first tomatoes have been harvested, the leaves located at the bottom of the stem are removed. The plant is then lowered down and the mounting means 17 are placed at the top of the depleted section of the stem. The depleted stem hangs down therefore into the aeroponic chamber, for it to be sprayed with the nutrient solution. Roots would grow from the depleted stem, and the plants are grown again till tomatoes are grown sufficiently for being harvested. These steps of depleting the lower section of the stem from its leaves, lowering the plant for placing the depleted stem section into the aeroponic chamber, rooting the depleted section and growing tomatoes are carried out again and again after each harvest of tomatoes.

The schematic and diagrammatic representations show in figures 2, 3, 5 and 9 are representations being simplified, out of scale in order to easy the understanding of the present invention.

All percentages, ratios and proportions herein are by weight, unless otherwise specified.

## Claims

1. An aeroponic growth unit (1) for growing plants comprising:
- an aeroponic chamber for enclosing the lower portion (12) of a plant, preferably the root portion of the plant, wherein the top section of the aeroponic chamber comprises at least one aperture (5) for mounting the plant onto the chamber and letting it passing through;
- at least one spraying means (6) for spraying a nutrient solution into the aeroponic chamber;
- at least one piping means for feeding the nutrient solution to the spraying means (6); and,
- at least one drainage means (7) for draining out the excess of nutrient solution from the aeroponic chamber;
wherein the aeroponic chamber comprises at least one element made of perforated material (9,10), said element (9,10) being suspended directly or indirectly to the top section of the aeroponic chamber and extending downwardly, said element (9,10) being suitable for accommodating the lower portion (12) of the plant, preferably the root portion of the plant, and said element (9,10) being suitable for micronizing the droplets sprayed;
wherein the element made of perforated material (9,10) is selected from the group consisting of a tubular element (9), a wrapping element (10), or combination thereof; and,
wherein the apertures have a total average surface of from 10 to 100 square centimetres.

2. The unit, according to claim 1, wherein the apertures have a total average surface of from 30 to 90 sqcm², alternatively from 50 to 80 sqcm².

3. The unit, according to claim 1 or 2, wherein the aeroponic chamber comprises a first part forming a vessel (3) comprising a top opening, and a second part forming a cover (4) comprising the at least one aperture (5), -wherein the vessel (3) is sealed by the cover 4.

4. The unit, according to any claims 1 to 3, wherein the element made of perforated material (9,10) is directly releasably attached to the top section of the aeroponic chamber, preferably to the cover 4.

5. The unit, according to any claims 1 or 2, wherein the element made of perforated material (9,10) is directly releasably attached to the top section of lower portion (12) of the plant.

6. The unit, according to any preceding claims, wherein the element made of perforated material (9,10) is opened at its top end for receiving the lower portion (12) of the plant and closed at its bottom end, preferably by using closing means (16).

7. The unit, according to any preceding claims, further comprising a mounting means (17) for mounting a portion of the plant tightly, said mounting means (17) being tightly, releasably attached onto the aperture (5) of the top section of the aeroponic chamber 2 (X).

8. The unit, according to any preceding claims, wherein it is movable.

9. The unit, according to claim 9, wherein it is mounted on at least three wheels for permitting free running the unit (1) along one movement axis only.

10. A system for growing plants aeroponically, according to any claims 1 to 9, wherein said system comprises at least two units (1) placed directly adjacent to each other so that the cover (4) of the vessel (3) are tightly fitted against each other.

11. A greenhouse comprising at least one system as defined in claim 10.

12. A method for growing plants aeroponically comprising the steps of:
a) providing an aeroponic growth unit (1) according to any claims 1 to 9;
b) providing a plant;
c) mounting tightly the plant onto the aperture (5), preferably using a mounting means (17), so that the lower portion (12), preferably the root portion, of the plant hangs down into the aeroponic chamber;
d) accommodating the lower portion (12) of the plant into the at least one element made of perforated material (9,10), said element (9,10) being suitable for micronizing the droplets sprayed;
e) attaching the at least one element made of perforated material (9,10) to the top portion of the aeroponic chamber, or alternatively to the top section of lower portion (12) of the plant;
f) spraying the nutrient solution at determined time and quantities for watering the lower part of the plant;
g) growing the plant for a time sufficient for roots to develop, flowers to blossom and/or fruits to grow.

## Patentansprüche

1. Aeroponische Anbaueinheit (1) zum Anbauen von Pflanzen, die aufweist:
- eine Aeroponikkammer zum Umschließen des unteren Teils (12) einer Pflanze, bevorzugt des Wurzelteils der Pflanze, wobei der Oberabschnitt der Aeroponikkammer wenigstens eine Öffnung (5) zum Anbringen der Pflanze auf der Kammer und zum Durchlassen dieser aufweist;
- wenigstens ein Sprühmittel (6) zum Sprühen einer Nährstofflösung in die Aeroponikkammer;
- wenigstens ein Leitungsmittel zum Zubringen der Nährstofflösung zu dem Sprühmittel (6); und
- wenigstens ein Dränagemittel (7) zum Ablassen des Überschusses an Nährlösung von der Aeroponikkammer;
wobei die Aeroponikkammer wenigstens ein Element (9, 10) aufweist, das aus perforiertem Material gemacht ist, wobei das Element (9, 10) direkt oder indirekt an dem Oberabschnitt der Aeroponikkammer eingehängt ist und sich nach unten erstreckt, wobei das Element (9, 10) zur Aufnahme des unteren Teils (12) der Pflanze, bevorzugt des Wurzelteils der Pflanze, geeignet ist und wobei das Element (9, 10) zum Mikronisieren der gesprühten Tropfen geeignet ist;
wobei das Element (9, 10), das aus perforiertem Material gemacht ist, ausgewählt ist aus einer Gruppe bestehend aus einem röhrenförmigen Element (9), einem einwickelnden Element (10) oder einer Kombination davon; und
wobei die Öffnungen eine totale mittlere Oberfläche von 10 bis 100 Quadratzentimetern aufweisen.

2. Einheit nach Anspruch 1, wobei die Öffnungen eine totale mittlere Oberfläche von 30 bis 90 cm², alternativ von 50 bis 80 cm² aufweisen.

3. Einheit nach einem der Ansprüche 1 oder 2, wobei die Aeroponikkammer einen ersten Teil, der ein Gefäß (3) bildet, das eine obere Öffnung aufweist, und einen zweiten Teil aufweist, der einen Deckel (4) bildet, der wenigstens eine Öffnung (5) aufweist, wobei das Gefäß (3) durch den Deckel (4) versiegelt ist.

4. Einheit nach einem der Ansprüche 1 bis 3, wobei das Element (9, 10), das aus perforiertem Material gemacht ist, direkt lösbar an dem Oberabschnitt der Aeroponikkammer, bevorzugt dem Deckel (4), befestigt ist.

5. Einheit nach einem der Ansprüche 1 oder 2, wobei das Element (9, 10), das aus perforiertem Material gemacht ist, direkt lösbar an dem Oberabschnitt des unteren Teils (12) der Pflanze befestigt ist.

6. Einheit nach einem der vorherigen Ansprüche, wobei das Element (9, 10), das aus perforiertem Material gemacht ist, an seinem oberen Ende offen ist, um den unteren Teil (12) der Pflanze aufzunehmen, und an seinem unteren Ende geschlossen ist, bevorzugt durch Verwendung von Schließmitteln (16).

7. Einheit nach einem der vorherigen Ansprüche, die weiter ein Anbringmittel (17) zum festen Anbringen eines Teils der Pflanze aufweist, wobei das Anbringmittel (17) fest, lösbar auf der Öffnung (5) des Oberabschnitts der Aeroponikkammer (2) befestigt ist.

8. Einheit nach einem der vorherigen Ansprüche, wobei diese beweglich ist.

9. Einheit nach Anspruch 9, wobei diese auf wenigstens drei Rädern angebracht ist, um freies Laufen der Einheit (1) entlang nur einer Bewegungsachse zu erlauben.

10. System zum aeroponischen Anbauen von Pflanzen nach einem der Ansprüche 1 bis 9, wobei das System wenigstens zwei Einheiten (1) aufweist, die direkt nebeneinander platziert sind, sodass die Deckel (4) des Gefäßes (3) fest aneinander passen.

11. Gewächshaus, das wenigstens ein System wie in Anspruch 10 definiert aufweist.

12. Verfahren zum aeroponischen Anbauen von Pflanzen, das die Schritte aufweist:
a) Bereitstellen einer aeroponischen Anbaueinheit (1) nach einem der Ansprüche 1 bis 9;
b) Bereitstellen einer Pflanze;
c) festes Anbringen der Pflanze auf der Öffnung (5), bevorzugt unter Verwendung eines Anbringmittels (17), sodass der untere Teil (12), bevorzugt der Wurzelteil, der Pflanze in die Aeroponikkammer hängt;
d) Unterbringen des unteren Teils (12) der Pflanze in dem wenigstens einen Element (9, 10), das aus perforiertem Material gemacht ist, wobei das Element (9, 10) zum Mikronisieren der gesprühten Tropfen geeignet ist;
e) Befestigen des wenigstens einen Elements (9, 10), das aus perforiertem Material gemacht ist, an dem oberen Teil der Aeroponikkammer, oder alternativ an dem Oberabschnitt des unteren Teils (12) der Pflanze;
f) Sprühen der Nährlösung in bestimmten Zeiträumen und Mengen zum Bewässern des unteren Teils der Pflanze;
g) Anbauen der Pflanze für einen Zeitraum ausreichend zum Entwickeln von Wurzeln, zum Hervorbringen von Blüten und/oder zum Wachsen von Früchten.

## Revendications

1. Unité de culture aéroponique (1) pour la culture de plantes, comprenant :
- une chambre aéroponique pour enfermer la portion inférieure (12) d'une plante, de préférence la portion de racine de la plante, dans laquelle la section supérieure de la chambre aéroponique comprend au moins une ouverture (5) pour monter la plante sur la chambre et la laisser passer à travers ;
- au moins un moyen de pulvérisation (6) pour pulvériser une solution nutritive dans la chambre aéroponique ;
- au moins un moyen de tuyauterie pour fournir la solution nutritive au moyen de pulvérisation (6) ; et,
- au moins un moyen de drainage (7) pour éliminer par drainage l'excès de solution nutritive à partir de la chambre aéroponique ;
dans laquelle la chambre aéroponique comprend au moins un élément fait de matériau perforé (9,10), ledit élément (9,10) étant suspendu directement ou indirectement à la section supérieure de la chambre aéroponique et s'étendant vers le bas, ledit élément (9,10) étant approprié pour loger la portion inférieure (12) de la plante, de préférence la portion de racine de la plante, et ledit élément (9,10) étant approprié pour microniser les gouttelettes pulvérisées ;
dans laquelle l'élément fait de matériau perforé (9,10) est sélectionné parmi le groupe constitué d'un élément tubulaire (9), d'un élément d'enveloppement (10), ou d'une association de ceux-ci ; et,
dans laquelle les ouvertures possèdent une surface moyenne totale de 10 à 100 centimètres carrés.

2. Unité selon la revendication 1, dans laquelle les ouvertures possèdent une surface moyenne totale de 30 à 90 cm², en variante de 50 à 80 cm².

3. Unité selon la revendication 1 ou 2, dans laquelle la chambre aéroponique comprend une première partie formant un récipient (3) comprenant un orifice supérieur, et une seconde partie formant un couvercle (4) comprenant au moins une ouverture (5), dans laquelle le récipient (3) est fermé de façon étanche par le couvercle (4).

4. Unité selon l'une quelconque des revendications 1 à 3, dans laquelle l'élément fait de matériau perforé (9,10) est directement fixé de façon libérable à la section supérieure de la chambre aéroponique, de préférence au couvercle (4).

5. Unité selon l'une quelconque des revendications 1 ou 2, dans laquelle l'élément fait de matériau perforé (9,10) est directement fixé de façon libérable à la section supérieure d'une portion inférieure (12) de la plante.

6. Unité selon de quelconques revendications précédentes, dans laquelle l'élément fait de matériau perforé (9, 10) est ouvert, à son extrémité supérieure, pour recevoir la portion inférieure (12) de la plante et fermé, à son extrémité inférieure, de préférence en utilisant un moyen de fermeture (16).

7. Unité selon de quelconques revendications précédentes, comprenant en outre un moyen de montage (17) pour monter une portion de la plante de façon serrée, ledit moyen de montage (17) étant fixé de façon serrée et de façon libérable sur l'ouverture (5) de la section supérieure de la chambre aéroponique (2).

8. Unité selon de quelconques revendications précédentes, dans laquelle elle est mobile.

9. Unité selon la revendication 9, dans laquelle elle est montée sur au moins trois roues pour permettre le déplacement libre de l'unité (1) le long d'un axe de mouvement seulement.

10. Système pour la culture aéroponique de plantes selon l'une quelconque des revendications 1 à 9, dans lequel ledit système comprend au moins deux unités (1) placées de façon directement adjacente l'une à l'autre pour que les couvercles (4) des récipients (3) soient ajustés de façon serrée l'un contre l'autre.

11. Serre comprenant au moins un système selon la revendication 10.

12. Procédé pour la culture aéroponique de plantes, comprenant les étapes de :
a) la fourniture d'une unité de culture aéroponique (1) selon l'une quelconque des revendications 1 à 9 ;
b) la fourniture d'une plante ;
c) le montage de façon serrée de la plante sur l'ouverture (5), de préférence en utilisant un moyen de montage (17), pour que la portion inférieure (12), de préférence la portion de racine, de la plante soit suspendue dans la chambre aéroponique ;
d) le logement de la portion inférieure (12) de la plante dans l'au moins un élément fait de matériau perforé (9, 10), ledit élément (9, 10) étant approprié pour microniser les gouttelettes pulvérisées ;
e) la fixation de l'au moins un élément fait de matériau perforé (9, 10) à la portion supérieure de la chambre aéroponique, ou en variante à la section supérieure de portion inférieure (12) de la plante ;
f) la pulvérisation de la solution nutritive à un instant et des quantités déterminés pour arroser la partie inférieure de la plante ;
g) la culture de la plante pendant une période suffisante pour que des racines se développent, des fleurs fleurissent et/ou des fruits murissent.
